# EUROPEAN PATENT SPECIFICATION

(11) **EP 2 100 830 B1**
(45) Date of publication and mention of the grant of the patent: **26.01.2011**
(21) Application number: 09001961.3
(22) Date of filing: 12.02.2009
(51) Int. Cl.: B65G 21/14

(54) **Specimen transport system**
Probentransportsystem
Système de transport d'échantillon

(30) Priority: 11.03.2008 JP 2008061244
(43) Date of publication of application: 16.09.2009
(73) Proprietor: Hitachi High-Technologies Corporation, Tokyo 105-8717 (JP)
(72) Inventor: Noda, Kazuhiro, Hitachinaka-shi Ibaraki, 312-8504 (JP); Tamura, Terumi, Hitachinaka-shi Ibaraki, 312-8504 (JP); Ooizumi, Jyunichi, Kasumigaura-shi Ibaraki 315-0055 (JP)
(74) Representative: Kirschner, Klaus Dieter

(56) References cited:
- WO-A1-2004/043835
- AT-B- 297 583
- CA-C- 2 211 588
- US-A- 1 041 439
- US-A1- 2005 056 523
- US-A1- 2008 060 916

## Description

The present invention relates to a specimen transport system, and specifically relates to a specimen transport system used to, when specimens, such as blood or urine, collected from patients in a hospital or the like are tested in a laboratory in the clinical test field, automatically transport the specimens to a specimen pretreatment apparatus or a specimen analysis apparatus.

A specimen transport system refers to a system that connects apparatuses, such as a specimen pretreatment apparatus and a specimen analysis apparatus, via a specimen transport line to provide automatic transportation between the apparatuses.

Pretreatment apparatuses and analysis apparatuses are installed in various types of locations and in various manners because the room size and the positions of columns and pipes are different depending on the facility to which such apparatuses are delivered. Therefore, a specimen transport system is build in conformity with the transport distance between the apparatuses, which is different depending on the facility to which the system is delivered. For conventional specimen transport systems, for example, JP Published Patent Application No. 2001-99845 A and JP Published Patent Application No. 11-83864 A (1999) describe line height adjustment, and building of a system.

For conventional specimen transport systems, there are several types of specimen transport lines having fixed lengths (e.g., 600 mm, 900 mm and 1200 mm), and a specimen transport system is built by combining some types of specimen transport lines in conformity with the installation locations of the apparatuses and the configuration of the system in the facility, to which the system is delivered, so that the system can be adapted to various transport distances.

However, a transport distance that cannot be met by a mere combination of those various types of specimen transport lines may occur. For example, there may be a case where the line does not reach the apparatuses because it is shorter than the transport distance between the apparatuses required when building a specimen transport system by several tens of millimetres.

The present techniques and means counter such problem by re-installing the apparatuses so as to adapt the transport distance to the length of the line, or designing and manufacturing a new specimen transport line that can be adapted to the transport distance. As a result, problems have arisen in, e.g., requiring a long time for such re-installing or designing and manufacturing and also requiring high costs.

US 2005/056523 A1 discloses an apparatus for conveying objects according to the preamble of claim 1. The apparatus uses two conveying arrangements which can move independently of one another. Each of the two conveying arrangements have a transport region and a return region. A dividing gap is arranged between the two conveying arrangements. A sliding mechanism can be positioned to at least one of adjust a length of the transport regions and adjust a length of the return regions. An equalizing mechanism can be positioned to at least one of compensate for the change in the return regions and compensate for the change in the transport regions. The sliding mechanism and the equalizing mechanism are separate mechanisms. This Abstract is not intended to define the invention disclosed in the specification, nor intended to limit the scope of the invention in any way.

In view of the aforementioned problems, an object of the present invention is to provide a specimen transport system that can easily be installed regardless of various transport distances, and is also inexpensive.

In order to achieve this object, the specimen transport system the present invention is configured as stated in claim 1. Preferred embodiments of the invention are characterized in the sub-claims.

The present invention provides a specimen transport system comprising: a transport line including a rack transport surface that transports a transport rack that holds a specimen container including a specimen such as blood or urine; and a conveyor belt included in the transport line, wherein the conveyor belt is formed in an endless loop, and the shape of the loop of the conveyor belt is changed according to a length of the rack transport surface (rack transport surface length).

According to the present invention, e.g., various transport distances between apparatuses can be met by changing the length of a rack transport surface (rack transport surface length) of a conveyor belt.

Further advantages and possible applications of the present invention become apparent from the following detailed description with reference to the drawings.
- FIG. 1: is an illustrative drawing of a specimen transport line, characterized by having a structure in which the amount of movement of an extra-length adjustment pulley and the amount of change in the rack transport surface length of a conveyor belt are substantially equal to each other.
- FIG. 2: is an illustrative drawing of a specimen transport line according to an embodiment of the present invention, characterized by having a structure in which tension adjustment and change of the rack transport surface length of a conveyor belt can be made simultaneously.
- FIG. 3: is an illustrative drawing of a specimen transport, characterized by having a structure in which a large amount of change in the rack transport surface length of a conveyor belt can be provided by means of multiple extra-length adjustment pulleys.
- FIG. 4: is an illustrative drawing of a specimen transport line according to another embodiment of the present invention, characterized by having a structure in which an extra-length adjustment pulley can make adjustment in a height direction.
- FIG. 5: is a cross-sectional view taken along line A-A of FIG. 2 according to another embodiment of the present invention.
- FIG. 6: is a diagram illustrating support guide rollers according to another embodiment of the present invention.
- FIG. 7: is a diagram illustrating a support guide according to another embodiment of the present invention.

A specimen transport line in a specimen transport system according to the present invention transports racks that hold specimen containers including biological samples, which are specimens to be tested such as blood or urine. Examples of these transport racks include a transport rack in which only one specimen container including a biological sample is placed and a transport rack in which, e.g., five or ten specimens are placed.

Embodiments of the present invention **characterized in that** the length of a rack transport surface (rack transport surface length) of a conveyor belt included in a specimen transport line is changed will be described with reference to the accompanying drawings.

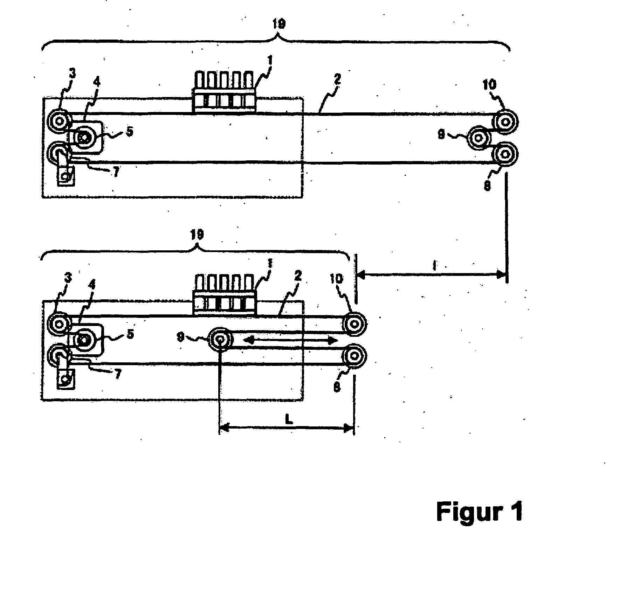

FIGS. 1, 2, 3 and 4 are drawings illustrating specimen transport lines, the specimen transport line having a structure in which the rack transport surface length of a conveyor belt formed in an endless loop can be changed.

Regarding an embodiment shown in FIG.1, an overview of the configuration and operation of the specimen transport line will be described.

FIG. 1 is an illustrative diagram of a specimen transport line characterized in having a structure in which the length L of movement of an extra-length adjustment pulley 9 and the length I of change in the rack transport surface length 19 of a conveyor belt 2 are substantially equal to each other (L =1).

A force generated by a motor 4 is conveyed by a drive shaft pulley 5 to the conveyor belt 2 supported by belt supporting pulleys 3, 6, 8 and 10. The rack transport surface length 19 of the conveyor belt 2 is changed by moving the belt supporting pulleys 8 and 10 laterally.

However, when the belt supporting pulleys 8 and 10 are moved laterally to change the rack transport surface length 19 of the conveyor belt 2, the tension of the conveyor belt 2 greatly changes, causing an extra length, and thus goes beyond the range of the tension that can be adjusted by a belt tension adjustment pulley 7. In order to transport racks, it is necessary to maintain the tension of the conveyor belt 2 constant.

Therefore, a structure in which an extra length of the rack transport surface length 19 of the conveyor belt 2 can be adjusted using the extra-length adjustment pulley 9 that make adjustment of the rack transport surface length 19 of the conveyor belt 2 and the tension of the belt 2 can be adjusted by the belt tension adjustment pulley 7 is used.

In the structure shown in FIG. 1, when the rack transport surface length 19 of the conveyor belt 2 is changed, the length I of change in the rack transport surface length 19 and the length L of movement of the extra-length adjustment pulley 9 are substantially equal to each other (I = L).

Therefore, the tension of the conveyor belt 2 can easily be made to fall within the range of tension that can easily be adjusted by the tension adjustment pulley 7 by changing the length L of movement of the extra-length adjustment pulley 9 by the length I of the rack transport surface length 19 of the conveyor belt 2.

As described above, the conveyor belt included in the transport line is formed in an endless loop, and the shape of the loop can be changed according to the length of the transport line, and accordingly, the transport line can easily be installed because the length can easily be adjusted regardless of various transport distances between the apparatuses such as an automatic analysis apparatus.

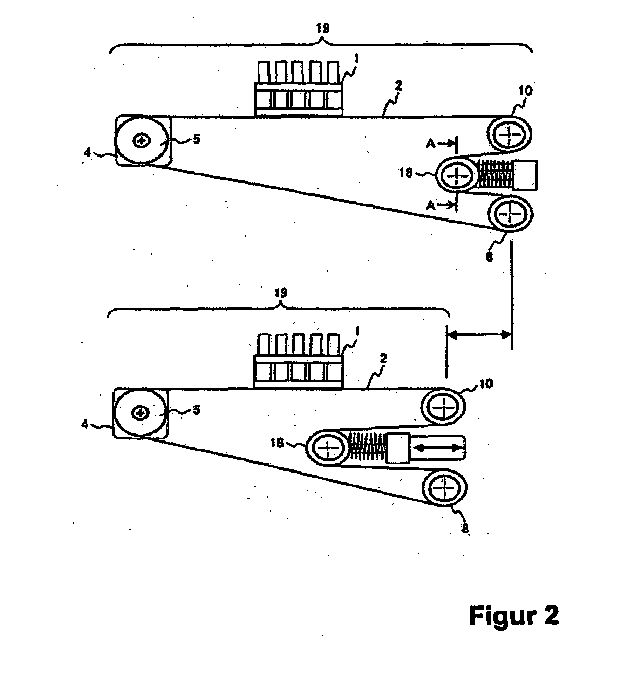

Next, regarding an embodiment shown in FIG. 2, an overview of the configuration and operation of a specimen transport line will be described. FIG. 2 is an illustrative diagram of a specimen transport line characterized by having a structure in which when the rack transport surface length 19 of a conveyor belt 2 is changed, tension adjustment and extra-length adjustment can simultaneously be made.

In FIG. 1, an extra-length adjustment pulley 9 and a tension adjustment pulley 7 are provided at different positions, and therefore, when the rack transport surface length 19 of the conveyor belt 2 is changed, it is necessary to adjust the tension of the conveyor belt 2 by means of the tension adjustment pulley 7 after adjusting the extra-length of the conveyor belt 2 by means of the extra-length adjustment pulley 9. Accordingly, when the rack transport surface length 19 of the conveyor belt 2 is changed, the conveyor belt 2 may come off from the pulleys.

The embodiment shown in FIG. 2 provides a structure in which tension adjustment function and extra-length adjustment can be made simultaneously by means of a tension and extra-length adjustment pulley 18, which is a pulley having both of the two functions, i.e., the tension adjustment function and the extra-length adjustment function which the extra-length adjustment pulley 9 in FIG. 1 and the tension adjustment pulley 7 in FIG.1 have.

As a result, when the rack transport surface length 19 of the conveyor belt 2 is changed, the conveyor belt 2 can be prevented from coming off from the pulleys, enabling the rack transport surface length 19 of the conveyor belt 2 to be changed while the tension of the conveyor belt 2 is checked.

Also, since tension adjustment and extra-length adjustment are made simultaneously by means of the tension and extra-length adjustment pulley 18, the rack transport surface length 19 of the conveyor belt 2 can be changed while the conveyor belt is maintained tightly, which is effective for, e.g., adjustment for a very small length.

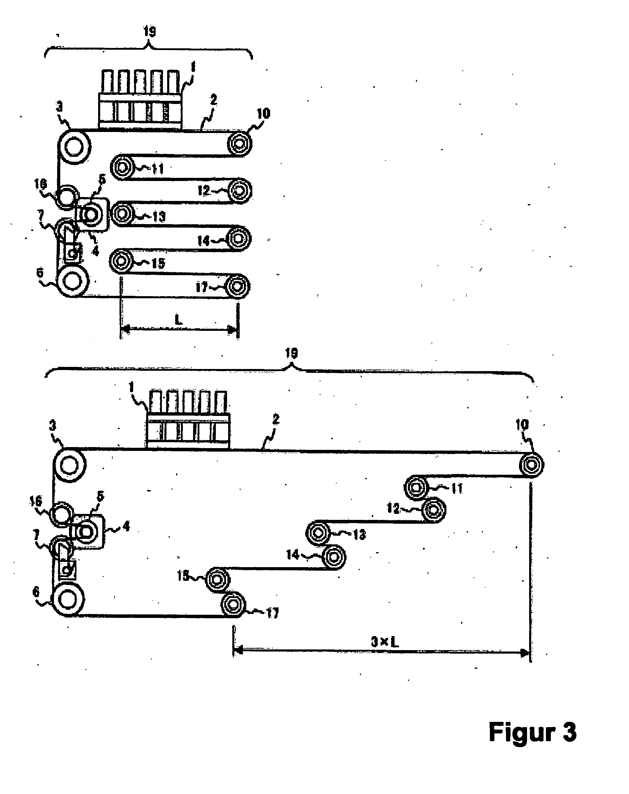

Next, regarding an embodiment illustrated in FIG. 3, an overview of the configuration and operation of a specimen transport line will be described. FIG. 3 is an illustrative diagram of a specimen transport line characterized by having a structure in which use of multiple extra-length adjustment pulleys 11, 12,13, 14 and 15 enables provision of a large amount of change in the rack transport surface length 19 of the conveyor belt 2.

In the case of FIG. 3, a structure in which the conveyor belt 2 is folded back three times with a width of L using five extra-length adjustment pulleys enables the rack transport surface length 19 of the conveyor belt 2 to be changed by a maximum of approximately 3L. Accordingly, when the transport distance between the apparatuses includes a relatively-large gap due to problems of the system configuration, the rack transport surface length 19 of the conveyor belt 2 can easily be adapted to the transport distance.

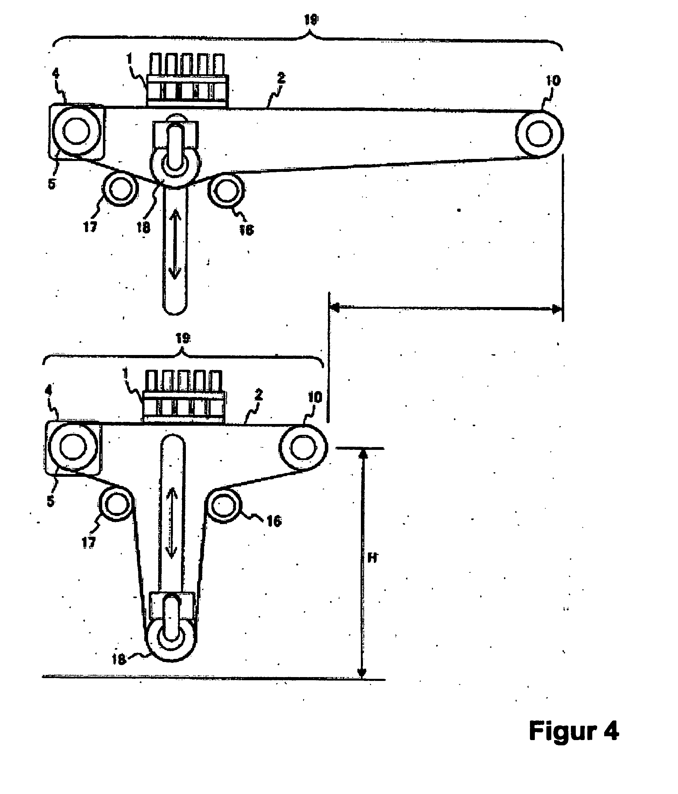

Next, regarding an embodiment shown in FIG. 4, an overview of the configuration and operation of a specimen transport line will be described. FIG. 4 is an illustrative diagram of a specimen transport line characterized by having a structure in which a tension and extra-length adjustment pulley 18 having both of two functions, i.e., a tension adjustment function and an extra-length function, makes adjustment in the height direction.

The embodiment shown in FIG. 4 is effective for the case where a sufficient height H up to the transport surface can be secured for the amount of change in the length 19 of a conveyor belt 2.

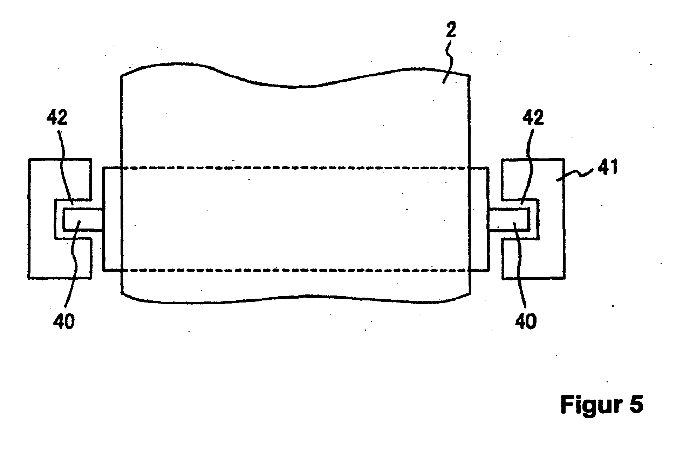

Next, a slidable supporting structure illustrated in FIG. 5 will be described. A spindle 40 of a tension and extra-length adjustment pulley 18 is slidably supported by slide grooves 42 of rib members 41 provided to a frame of a specimen transport system. The tension and extra-length adjustment pulley 18 is fixed at a position where the tension of the conveyor belt 2 is adjusted to a proper value, so that it cannot slide. Since the tension and extra-length adjustment pulley 18 is slidably supported by the slide grooves 42, the tension can easily be adjusted.

The slide grooves 42 can be oriented in a direction other than the longitudinal direction shown in FIG. 4 and the lateral direction shown in FIG. 2.

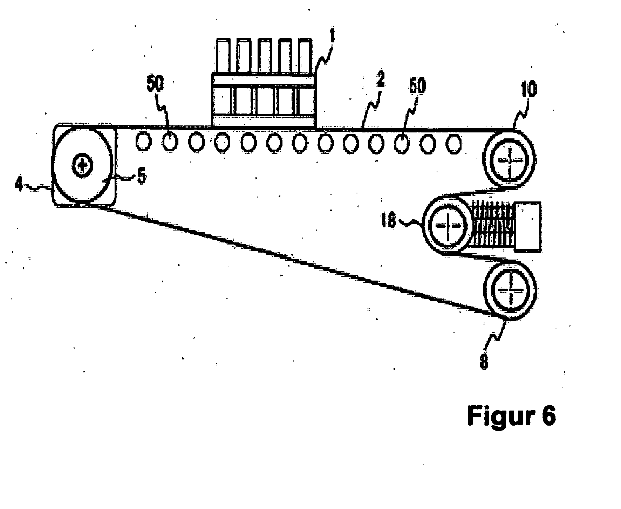

An embodiment illustrated in FIG. 6 will be described. This embodiment is characterized by including support guide rollers 50 that support a conveyor belt 2 between two belt supporting pulleys 5 and 10 from the lower side. As a result of supporting the conveyor belt 2 by means of the multiple support guide rollers 50 from the lower side, flexure of the conveyor belt 2 can be prevented, and thus, transport racks can be transported in a stable manner.

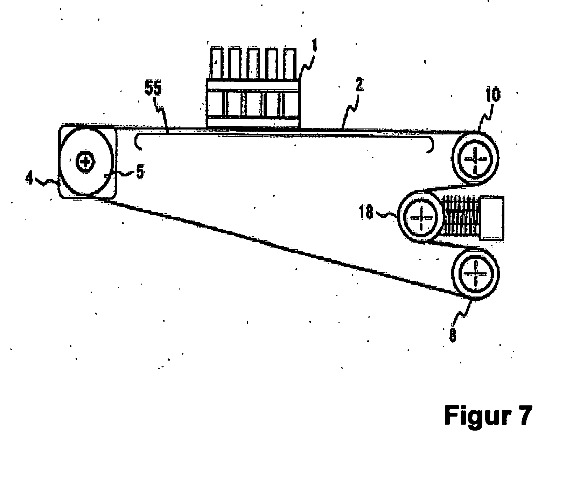

An embodiment illustrated in FIG. 7 will be described. This embodiment is characterized by including a support guide 55 that supports a conveyor belt 2 between two belt supporting pulleys 5 and 10 from the lower side. As a result of supporting the conveyor belt 2 from the lower side by means of the support guide with both ends rounded, flexure of the conveyor belt 2 is prevented, and thus, transport racks can be transported in a stable manner.

### List of reference signs

- 1: specimen transport rack
- 2: belt
- 3: belt supporting pulley
- 6: belt supporting pulley
- 8: belt supporting pulley
- 10: belt supporting pulley
- 16: belt supporting pulley
- 17: belt supporting pulley
- 4: motor
- 5: drive shaft pulley (belt supporting pulley)
- 7: tension adjustment pulley
- 9: extra-length adjustment pulley
- 11: extra-length adjustment pulley
- 12: extra-length adjustment pulley
- 13: extra-length adjustment pulley
- 14: extra-length adjustment pulley
- 15: extra-length adjustment pulley
- 18: tension and extra-length adjustment pulley
- 19: rack transport surface length of a conveyor belt

## Claims

1. A specimen transport system comprising: a transport line including a rack transport surface that transports a transport rackt (1) that holds a specimen container including a specimen such as blood or urine; and a conveyor belt (2) included in the transport line, wherein
the conveyor belt (2) is formed in an endless loop, and the shape of the loop of the conveyor belt (2) is changed according to a length of the rack transport surface,
at least two belt supporting pulleys (5, 10) are provided that support both ends of the rack transport surface of the conveyor belt (2) and determine a length of the transport line (19), wherein the rack transport surface length (19) is changed by changing a distance between the two belt supporting pulleys (5, 10),
an adjustment pulley (18) supporting the conveyor belt (2) is provided will means for moving said adjustment pulley (18) so as to adjust the rade transport surface length (19), a drive shaft pully (5) is provided to apply a transport movement to the conveyor belt (2),
**characterized in that** said adjustment pulley (18) is additionally provided with tension adjusting means
that adjusts a tension of the conveyor belt (2) against the drive shaft pulley (5).

2. The specimen transport system according to claim 1, **characterized by** having a structure in which an extra-length adjustment pulley (18) makes adjustment in a height direction

3. The specimen transport line according to any of the claims 1 or 2, **characterized in that** at least one of the two belt supporting pulleys (5, 10) doubles as a drive shaft pulley (5) that applies a transport movement force to the conveyor belt (2).

4. The specimen transport line according to any of the claims 1 to 3, **characterized in that** support guide rollers (50) or a support guide (55) is provided that supports the conveyor belt (2) between the two belt supporting pulleys (5, 10) from a lower side. **Claims**

5. The specimen transport line according to anyone of the claims 1 to 4, **characterized in that** the extra-length adjustment pulley (18) used as both of the extra-length adjustment pulley and the tension adjustment pulley is slidable relative to guide grooves (42) and moveable in a direction in which the tension of the conveyor belt (2) is changed.

## Patentansprüche

1. Probentransportsystem umfassend:
eine Transportbahn mit einer Gestelltransportfläche, die ein Transportgestell (1) transportiert, das einen Probebehälter mit einer Probe, beispielsweise Blut oder Urin, hält, und mit einem Förderband (2), das in der Transportbahn enthalten ist, wobei
das Förderband (2) als endlose Schleife ausgebildet ist und die Form der Schleife des Förderbandes (2) entsprechend einer Länge der Gestelltransportfläche geändert wird, wenigstens zwei das Band unterstützende Laufrollen (5,10) vorgesehen sind, die beide Ende der Gestelltransportfläche des Förderbandes (2) abstützen und eine Länge der Transportbahn (19) bestimmen, wobei die Länge (19) der Gestelltransportfläche **dadurch** geändert wird, dass der Abstand zwischen den zwei das Band abstützenden Laufrollen (5,10) geändert wird, eine Stelllaufrolle (18), die das Förderband (2) abstützt mit Mitteln versehen ist, um die Stelllaufrolle (18) zu bewegen, um die Länge (19) der Gestelltransportfläche einzustellen, und eine Antriebswellenlaufrolle (5) vorgesehen ist, um eine Transportbewegung auf das Förderband (2) zu übertragen,
**dadurch gekennzeichnet, dass**
die Stelllaufrolle (18) zusätzlich mit Spannungseinstellmitteln versehen ist, die eine Spannung des Förderbandes (2) gegen die Antriebswellenlaufrolle (5) einzustellen.

2. Probentransportsystem nach Anspruch 1, **gekennzeichnet durch** eine Struktur, in der eine Extralängenstelllaufrolle (18) eine Einstellung in einer Höhenrichtung ausführt.

3. Probentransportsystem nach einem der Ansprüche 1 oder 2, **dadurch gekennzeichnet, dass** wenigstens eines der beiden den das Band unterstützenden Laufrollen (5,10) zusätzlich als Antriebswellenlaufrolle (5) dient, die eine Kraft für die Transportbewegung auf das Förderband (2) überträgt.

4. Probentransportsystem nach einem der Ansprüche 1 bis 3, **dadurch gekennzeichnet, dass** Lagerführungsrollen (50) oder eine Lagerführung (55) vorgesehen ist, die das Förderband (2) zwischen den beiden, das Band tragenden Laufrollen (5,10) von der Unterseite her unterstützt,

5. Probentransportsystem nach einem der Ansprüche 1 bis 4, **dadurch gekennzeichnet, dass** die Extralängenstelllaufrolle (18), die als extra Längenstelllaufrolle und die Spannungsstelllaufrolle verwendet werden, relativ zu Führungsnuten (42) gleitbar und in einer Richtung bewegbar sind, in der die Spannung des Förderbande (2) verändert wird.

## Revendications

1. Système de transport d'échantillons comprenant: une ligne de transport incluant une surface de transport grille qui fait transporter une grille de transport (1) qui soutient un récipient d'échantillons incluant un échantillon tel que le sang ou l'urine; et une courroie de convoyeur (2) incluse dans la ligne de transport, où:
- la courroie de convoyeur (2) est formée dans une boucle sans fin, et la forme de la boucle de la courroie de convoyeur (2) est changée selon une longueur de la surface de transport grille,
- au moins deux poulies de support de courroie (5, 10) sont pourvues qui soutiennent les deux extrémités de la surface de transport grille de la courroie de convoyeur (2) et détermine une longueur de la ligne de transport (19), où la longueur de la surface de transport grille (19) est changée en changeant une distance entre les deux poulies de support de courroie (5, 10),
- une poulie d'ajustement (18) soutenant la courroie de convoyeur (2) est pourvue avec le moyen pour mouvoir ladite poulie d'ajustement (18) pour ajuster la longueur de la surface de transport de la grille (19), une poulie d'arbre d'actionnement (5) est pourvue pour appliquer un mouvement de transport à la courroie de convoyeur (2),
**caractérisé en ce que** ladite poulie d'ajustement (18) est pourvue de manière additionnelle avec le moyen d'ajustement de tension qui fait ajuster une tension de la courroie de convoyeur (2) contre la poulie de l'arbre d'actionnement (5).

2. Système de transport d'échantillons selon la revendication 1, **caractérisé par** avoir une structure dans laquelle une poulie d'ajustement d'extra longueur (18) fait l'ajustement dans une direction de la hauteur.

3. Ligne de transport d'échantillons selon la revendication 1 ou 2, **caractérisée en ce qu'**au moins l'une d'entre les deux poulies de support de courroie (5, 10) double comme une poulie d'arbre d'actionnement (5) qui applique une force de mouvement de transport à la courroie de convoyeur (2).

4. Ligne de transport d'échantillons selon l'une quelconque des revendications 1 à 3, **caractérisée en ce que** les rouleaux de guidage de support (50) ou un guidage de support (55) est pourvu qui soutient la courroie de convoyeur (2) entre les deux poulies de support de courroie (5, 10) à partir d'une côté inférieur.

5. Ligne de transport d'échantillons selon l'une quelconque des revendications 1 à 4, **caractérisée en ce que** la poulie d'ajustement d'extra longueur (18) utilisée comme tant la poulie d'ajustement d'extra longueur (18) que la poulie d'ajustement de tension est capable de glisser relative aux cannelures de guidage (42) et capable de se mouvoir dans une direction dans laquelle la tension de la courroie de convoyeur (2) est changée.
